# EUROPÄISCHE PATENTSCHRIFT

(11) **EP 1 566 335 B1**
(45) Veröffentlichungstag und Bekanntmachung des Hinweises auf die Patenterteilung: **28.02.2007**
(21) Anmeldenummer: 05000873.9
(22) Anmeldetag: 18.01.2005
(51) Int. Cl.: B64D 11/06

(54) **Fluggastsitzreihe**
Airplane convertible seat assembly
Rangée de sièges convertible pour avion

(30) Priorität: 18.02.2004 DE 102004008877
(43) Veröffentlichungstag der Anmeldung: 24.08.2005
(73) Patentinhaber: Recaro Aircraft Seating GmbH & Co. KG, 74523 Schwäbisch Hall (DE)
(72) Erfinder: Baumann, Jürgen, Dipl.-Ing., 78351 Bodman-Ludwigshafen (DE); Erb, Andreas, Dipl.-Designer, 88239 Wangen (DE); Pilgram, Christian, Dipl.-Designer, 88085 Langenargen (DE)
(74) Vertreter: Bartels & Partner

(56) Entgegenhaltungen:
- EP-A- 0 071 670
- EP-A- 0 335 018
- EP-A- 0 385 861
- US-A- 3 374 032
- US-A- 3 910 632

## Beschreibung

Die Erfindung betrifft eine Fluggastsitzreihe mit
a) mindestens drei Sitzen,
b) einem allen Sitzen gemeinsamen Sitzgestell, das einen vorderen Querholm und einen zu diesem parallel hinteren Querholm aufweist, die relativ zueinander unbeweglich mittels Sitzfüßen fest verbunden sind,
c) Sitzteilpolster tragenden Polsterträgern,
d) von den beiden Querholmen getragenen, an den Enden der Sitzreihe und zwischen den Sitzen angeordneten Sitzteilern,
e) in ihrer Neigungslage einstellbaren Rückenlehnen, die schwenkbar mit den Sitzteilern verbunden sind, und
f) Armlehnen, vorzugsweise an beiden Enden der Sitzreihe und zwischen den Sitzen, wobei die letztgenannten Armlehnen auf mindestens einer parallel zu den Querholmen verlaufenden und von den zwischen den Sitzen angeordneten Sitzteilern getragenen Führungsstegen schwenkbar angeordnet sind,
wobei ein mittlerer Sitz einer Sitzreihe zwischen benachbarten Sitzen ein Trennteil aufweist, das in einer Nichtgebrauchsstellung anordenbar ist und in einer Gebrauchsstellung oberhalb der Sitzteiler mit einer im wesentlichen horizontalen Lage gegenüber dem jeweiligen Sitz angeordnet ist und wobei mittels einer Schwenkeinrichtung das Trennteil zwischen den genannten Stellungen bewegbar ist.

Es ist bei einer Fluggastsitzreihe, die von einer Anordnung mit drei Sitzen normaler Breite in eine solche mit zwei Sitzen vergrößerter Breite umwandelbar ist, bekannt (EP 0 322 930 A2), bei einer Umwandlung in zwei Sitze größerer Breite beide sich zwischen den Sitzen befindende Armlehnen aus ihrer Halterung herauszunehmen und aus dem Polster der Rückenlehne des Mittelsitzes eine breite Mittelarmlehne herauszuklappen. Die Umstellung ist deshalb aufwendig. Außerdem wird ein Stauraum für die abnehmbaren Armlehnen benötigt.

Ferner ist es bei einer Fluggastsitzreihe bekannt (EP 0 530 900 A1), vor der Umwandlung von einer Anordnung mit drei Sitzen in eine solche mit zwei Sitzen die beiden mittleren Armlehnen nach hinten zu klappen, so dass sie beim Zusammenschieben der drei Sitze bis zu einer spaltfreien Anlage aneinander hinter der tragenden Struktur der Rückenlehne des Mittelsitzes zu liegen kommen. Für die beiden Sitze vergrößerter Breite wird je eine Armlehne aus dem Polster der Rückenlehne des Mittelsitzes herausgeklappt. Auch hier ist eine Umstellung entsprechend zeitaufwendig.

Weiterhin ist eine Fluggastsitzreihe bekannt (EP 0 530 923 A1), bei der für eine Veränderung des Abstandes zwischen den Sitzen die beiden zwischen den Sitzen angeordneten Armlehnen auf je zwei parallel zueinander und zu den Querholmen verlaufenden Stangen als Führungsstege gelagert sind, die von zwischen den Sitzen vorgesehenen Sitzteilern getragen werden. An dem jeweils benachbarten äußeren Sitz ist eine Steuerstange festgelegt, mit deren Hilfe die Armlehne unabhängig von der Größe des einstellbaren Zwischenraumes zwischen den Rückenlehnen auf die Mitte des Zwischenraumes ausgerichtet bleibt. Nachteilig ist bei dieser Lösung, dass sie sich nur für Sitzreihen eignet, bei denen die Anzahl der Sitzplätze nicht verändert wird, sondern nur der Zwischenraum zwischen diesen.

Bei der bekannten Fluggastsitzreihe der eingangs genannten Art (EP 0 530 920 A1) sind die zwischen den Sitzen vorgesehenen Armlehnen ebenfalls auf sich in Längsrichtung der Querholme erstreckenden Führungsstegen gelagert. Ihre Verschiebung auf diesen stangenartigen Führungsstegen Führungsstangen erfolgt jedoch mittels je eines flexiblen Zuges, der einerseits mit der Armlehne und andererseits mit einem Längsträger verbunden ist, welcher bei einer Umwandlung der Sitzreihe von einer solchen mit drei Sitzen normaler Breite in eine Sitzreihe mit zwei Sitzen größerer Breite und umgekehrt zwangsweise in Sitzquerrichtung verschoben wird. Bei dieser Fluggastsitzreihe ist nicht nur der Kraftaufwand für eine Sitzverschiebung relativ groß; nachteilig ist auch, dass die Lagerung der Mittelarmlehne konstruktiv aufwendig, relativ schwer und kostenintensiv ist.

Demgemäß wurde bei einer bekannten Fluggastsitzreihe (DE 43 29 452 C2) bereits vorgeschlagen, unter Vermeidung zusätzlicher Bauteile für die Lagerung der Armlehnen diese an einer rohrartigen Führungsstange anzuordnen, über die die einzelnen Rückenlehnen mit den zwischen den Sitzen angeordneten Sitzteilern verbunden sind. Obwohl das bei der bekannten Lösung eingesetzte Hebelgetriebe für die Verschiebung der Armlehnen einen sehr reibungsarmen Antrieb gewährleistet, so dass der Kraftaufwand für die Verschiebung der Sitze und Armlehnen so gering gehalten werden kann wie möglich, ist der dahingehende Umstellaufwand immer noch als hoch einzustufen und trotz der erreichten Verbesserungen ist die bekannte Lösung kostenintensiv in der Realisierung und schwer, was bekanntermaßen im Bereich der Luftfahrt als sehr nachteilig angesehen wird, wo man jedes Gramm zur Erhöhung der Nutzlast einsparen möchte.

Durch die EP-A-0 385 861 ist eine gattungsgemäße Fluggastsitzreihe mit mindestens drei Sitzen bekannt. Der mittlere Sitz ist gegenüber den benachbarten Sitzen mittels zweier Armlehnen separiert, die jeweils über ein Parallelogrammgestänge voneinander weg in eine äußere Position bringbar sind, was die Sitzbenutzung des mittleren Sitzes erlaubt, sowie umgekehrt in Richtung aufeinander zu in eine innere Position bringbar sind, bei der sich die Sitzbreite für die benachbarten Sitze erhöht. Bei der bekannten Lösung ist unterhalb der Sitzteilpolsterung für den mittleren Sitz ein als Tischteil vorgesehenes Trennteil in einer Nichtgebrauchsstellung in einer horizontalen Lage gegenüber dem mittleren Sitz oberhalb der zuordenbaren Sitzfüße für diesen mittleren Sitz angeordnet, das mittels einer Schwenkhebeleinrichtung in eine gleichfalls horizontal verlaufende Gebrauchsstellung nach oben ausschwenkbar ist, um dergestalt die Sitzaufteilung zwischen den äußeren dann verbreiterten Sitzen mit vorzunehmen. Bei der bekannten Lösung wird das dahingehende, als Tischelement dienende Trennteil in der Gebrauchsstellung auf den beiden benachbarten, aufeinander zu geschwenkten Armlehnen aufgesetzt und eine Verstaumöglichkeit in die Nichtgebrauchsstellung ist möglich, sobald die beiden Armlehnen voneinander weggeschwenkt ihre äußere Position einnehmen. Bei der bekannten Lösung ist wiederum ein entsprechender Umstellaufwand zu betreiben bedingt durch die Paralleleinstellung der Armlehnen und die jeweilige Umbaumaßnahme im Bereich des Sitzteilpolsters für den mittleren Sitz, sobald das Trennteil für den Umbau einer Dreier-Sitzreihe in eine Zweier-Sitzreihe benötigt wird.

Ausgehend von diesem Stand der Technik liegt daher der Erfindung die Aufgabe zugrunde, eine Fluggastsitzreihe zu schaffen, die trotz einer einfachen und gewichtsarmen Konstruktion eine Umrüstung von Sitzen einer bestimmten Breite auf Sitze mit einer anderen nutzbaren Breite bei verkürztem Zeitaufwand ermöglicht. Eine dahingehende Aufgabe löst eine Fluggastsitzreihe mit den Merkmalen des Patentanspruches 1 in seiner Gesamtheit.

Dadurch, dass gemäß dem kennzeichnenden Teil des Patentanspruches 1 in der Nichtgebrauchsstellung das Trennteil im Bereich der zuordenbaren Sitzfüße für diesen mittleren Sitz angeordnet ist und eine im wesentlichen vertikale Lage gegenüber dem jeweiligen Sitz einnimmt, läßt sich eine sog. drei Sitze umfassende Economy-Fluggastsitzreihe, wie im Stand der Technik aufgezeigt, in eine zweisitzige Business-Fluggastsitzreihe umwandeln mit einer entsprechenden Sitzverbreiterung, jedoch mit einer gegenüber der bekannten Lösung vereinfachten und gewichtsarmen Konstruktion sowie mit einer vereinfachten Umrüstung mit verkürztem Zeitaufwand.

Zunächst wird durch Hochklappen der mittleren Armlehnen innerhalb der Fluggastsitzreihe erreicht, dass es zu einer faktisch nutzbaren Sitzverbreiterung der beiden äußeren Sitze kommt und der mittlere Sitz innerhalb der Fluggastsitzreihe wird dem Grunde nach dadurch belegt, dass das Trennteil aus der skizzierten Nichtgebrauchsstellung in die Gebrauchsstellung hochgeschwenkt die nutzbare Sitzfläche dieses mittleren Sitzes überdeckt und insoweit einem potentiellen Sitzbenutzer (Fluggast) die Möglichkeit nimmt, diesen mittleren Sitz als Sitzplatz zu nutzen. Ist das Trennteil in seiner Gebrauchsstellung, also oberhalb der Sitzfläche des mittleren Sitzes arretiert, sind die jeweiligen Sitzbenutzer an den äußeren Enden der Fluggastsitzreihe im jeweiligen Sitz aufgenommen, räumlich deutlich voneinander separiert, was bei diesen als subjektiven Eindruck ein großzügiges Raumangebot entstehen läßt, was im Rahmen der Business - Class gewünscht ist. Neben der bereits angesprochenen faktischen Sitzverbreiterung für die beiden äu-ßeren Sitze einer Fluggastsitzreihe kommt insoweit über das Trennteil in der Gebrauchsstellung der eigenständig nutzbare verbreiterte Sitzbereich besonders zur Geltung und in Abhängigkeit der Ausgestaltung des Trennteils kann dann dieses von den gegenüberliegend sitzenden Sitzbenutzern gleichermaßen benutzt werden.

In der praktischen Realisierung wird dabei vor dem Flug über eine entsprechende Service - Mannschaft bei Bedarf die Economy - Fluggastsitzreihe in die Business - Fluggastsitzreihe umgewandelt, so dass bei Betreten des Flugzeuges der jeweilige Sitzbenutzer in der Business - Class die bereits eingestellte Sitzverbreiterung vorfindet und hier selbst nicht mehr tätig werden muß. Umgekehrt schwenkt die angesprochene Service - Mannschaft das Trennteil zurück in seine Nichtgebrauchsstellung, sofern die Business - Fluggastsitzreihe in eine Economy - Fluggastsitzreihe mit drei nebeneinanderliegenden Sitzen umgebaut werden soll. Die erfindungsgemäße Fluggastsitzreihe braucht nicht auf Sitzanordnungen mit drei nebeneinander angeordneten Sitzen eingeschränkt zu sein, sondern die Sitzreihe kann hier mehr nebeneinanderliegende Sitze umfassen, wobei dann vorzugsweise in alternierender Reihenfolge zwischen jedem Sitz, der als Business - Sitz vorgesehen ist, ein Sitz mit dem Trennteil vorhanden ist. Es ist aber auch möglich, über zwei nebeneinander angeordnete Sitze mit Trennteilen eine mittlere Trennung über zwei Sitze einer Viererreihe vorzunehmen, wobei dann wiederum die beiden äußersten Sitze den Business - Sitz mit verbreiterter Sitzfläche ausbilden.

Bei einer besonders bevorzugten Ausführungsform der erfindungsgemäßen Fluggastsitzreihe ist das Trennteil ein Tischelement. Auf diese Art und Weise steht dem Business -Sitzbenutzer vermehrt für seine Verwendung Tischfläche zur Verfügung.

Bei einer weiteren bevorzugten Ausführungsform der erfindungsgemäßen Fluggastsitzreihe weist die Schwenkeinrichtung mindestens einen schwenkbar angeordneten, winklig ausgebildeten Schwenkhebel auf, der jeweils mit einem Ende schwenkbar am Sitzgestell oder Teilen desselben angelenkt ist und mit seinem anderen Ende schwenkbar an Teilen des Trennteils. Die dahingehende Schwenkeinrichtung mit jeweils winklig ausgebildetem Schwenkhebel erlaubt auf besonders platzsparende Art und Weise, den Schwenkvorgang für das Trennteil vorzunehmen.

Bei einer anders gearteten, bevorzugten Ausführungsform der erfindungsgemäßen Fluggastsitzreihe kann aber die Schwenkeinrichtung auch aus einem Parallelogrammgestänge bestehen, dessen Lenker mit ihrem oberen Ende in der Nichtgebrauchsstellung nach vorne und in der Gebrauchsstellung ansonsten nach hinten weisen. Auch insoweit läßt sich platzsparend das Trennteil von seiner Nichtgebrauchsstellung in die Gebrauchsstellung und umgekehrt verschwenken.

Alternativ kann bei einer anders gearteten Fluggastsitzreihe auch vorgesehen sein, das Trennteil unterhalb der Sitzfläche, insbesondere des mittleren Sitzes, in einer Aufnahme zu bevorraten, um es dann von dort zu entnehmen und in der Gebrauchsstellung auf den mittleren Sitz verrastend aufzusetzen. Die genannten erfindungsgemäßen Schwenklösungen haben jedoch den Vorteil, dass man den Einbauraum unter der Sitzfläche nicht benötigt, so dass dergestalt dort eine für den Notfall vorgesehene Schwimmweste od. dgl. gut zugänglich bevorratet werden kann.

Bei einer weiteren, bevorzugten Ausführungsform der erfindungsgemäßen Fluggastsitzreihe weist in der Nichtgebrauchsstellung die nutzbare Tischfläche des Tischelementes vom Sitzgestell weg in Richtung Umgebung oder in Richtung Sitzgestell. Ferner ist vorzugsweise vorgesehen, dass bei der in die Umgebung weisenden Tischfläche diese in der Nichtgebrauchsstellung von einer schalenartigen Abdeckung abgedeckt ist, die schwenkbar an mindestens einem Sitzfuß angelenkt ist. Dergestalt läßt sich die nutzbare Tischfläche vor Beschädigungen und Verschmutzungen im Beinraum schützen. Nach Freigabe des Tischelementes wird die schalenartige Abdeckung dann wieder in ihre Grundstellung zurückverschwenkt, so dass dergestalt der frei nutzbare Beinraum für den jeweiligen Business - Sitzbenutzer nicht eingeschränkt ist.

Bei einer weiteren, besonders bevorzugten Ausführungsform der erfindungsgemäßen Fluggastsitzreihe ist das Trennteil in der Gebrauchsstellung mit einer Rast- oder Einklinkeinrichtung mit feststehenden Teilen des zuordenbaren Sitzes, insbesondere des jeweiligen Führungssteges, verrastbar bzw. einklinkbar, an der die zuordenbare Armlehne schwenkbar angeordnet ist. Ferner besteht die Möglichkeit des Einrastens oder Einklinkens an sog. Auflageteilen des Sitzes, die parallel oder koaxial zum jeweiligen Führungssteg der Armlehne verlaufen. Hierdurch ist das Trennteil, insbesondere in Form des Tischelementes, mit feststehenden Baukomponenten des Sitzes in der Gebrauchsstellung verbunden, was eine weitgehende ruhige und sichere Fixierung des Trennteils gewährleistet. Demgemäß gibt das Trennteil in der Gebrauchsstellung auch nicht nach, beispielsweise wenn ein Sitzbenutzer bei Verlassen seines Sitzes sich an dem Trennteil entsprechend abstützen sollte.

Bei einer weiteren, bevorzugten Ausführungsform der erfindungsgemäßen Fluggastsitzreihe sind zumindest die mittleren schwenkbaren Armlehnen in ihrer hochgeklappten Stellung integraler Bestandteil einer dann couchartigen Rückenlehne, gebildet aus mindestens drei in Reihe nebeneinander angeordneten Sitzen, zumindest sofern die einzelnen Rückenlehnen in ihrer aufrechten Neigungseinstellage sind. Bei der Erweiterung der Sitzfläche ist mithin ein Business - Sitzbenutzer durch die hochgeklappten Armlehnen in seinem Sitzkomfort nicht gestört, wobei vorzugsweise vorgesehen ist, dass die Armlehnen an ihrer Unterseite eine entsprechende Polsterung aufweisen.

Bei einer weiteren, bevorzugten Ausführungsform der erfindungsgemäßen Fluggastsitzreihe ist mittels mindestens eines Kraftspeichers (Zugfeder) das Trennteil automatisch von seiner Nichtgebrauchsstellung nach Auslösen oder Betätigen zumindest teilweise in Richtung seiner Gebrauchsstellung gebracht, was den Kräfteaufwand für die Service - Mannschaft reduzieren hilft und im übrigen den Montagekomfort erhöht, da dann das Trennteil nicht mehr aus einer untersten Nichtgebrauchsposition erst noch angehoben werden muß.

Vorzugsweise ist des weiteren vorgesehen, dass das Trennteil an seinen gegenüberliegenden Enden, den benachbarten Sitzen eines mittleren Sitzes zugewandt, in der Art von Armlehnen Aufstützelemente aufweist. Somit steht dann dem Business - Sitzbenutzer ein Teil des Trennteils zur Komforterhöhung als Armlehne zur Verfügung.

Im folgenden wird die erfindungsgemäße Fluggastsitzreihe anhand zweier Ausführungsbeispiele nach der Zeichnung näher erläutert. Dabei zeigen in prinzipieller und nicht maßstäblicher Darstellung sowie in perspektivischer Ansicht die
- Fig.1 und 2: eine erste Ausführungsform der erfindungsgemäßen Fluggastsitzreihe mit einem Trennteil, einmal in der Nichtgebrauchsstellung, einmal in der Gebrauchsstellung,
- Fig.3, 4 und 5: in verschiedenen Stellungen die wesentlichen Komponenten des mittleren Sitzes einer zweiten Ausführungsform einer Fluggastsitzreihe mit dem Trennteil in verschiedenen Stellungen.

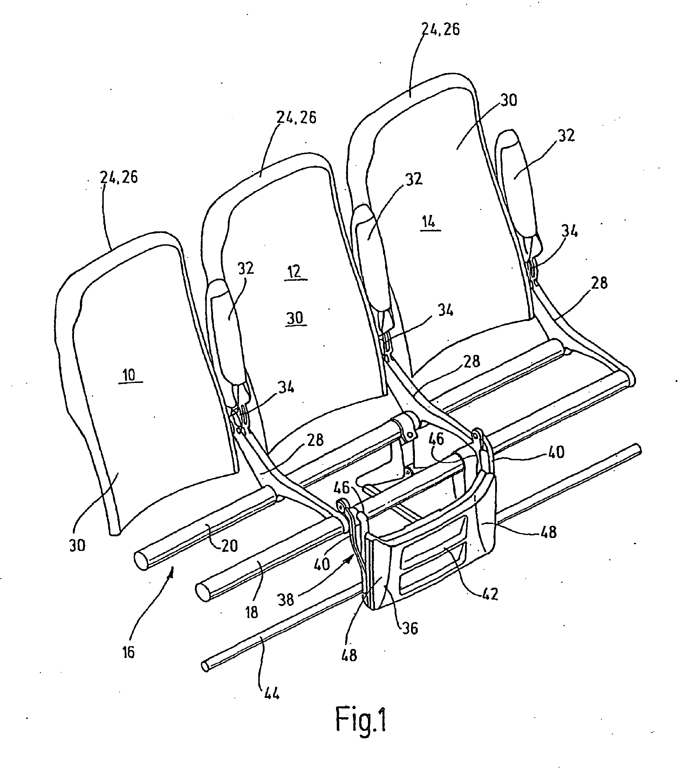

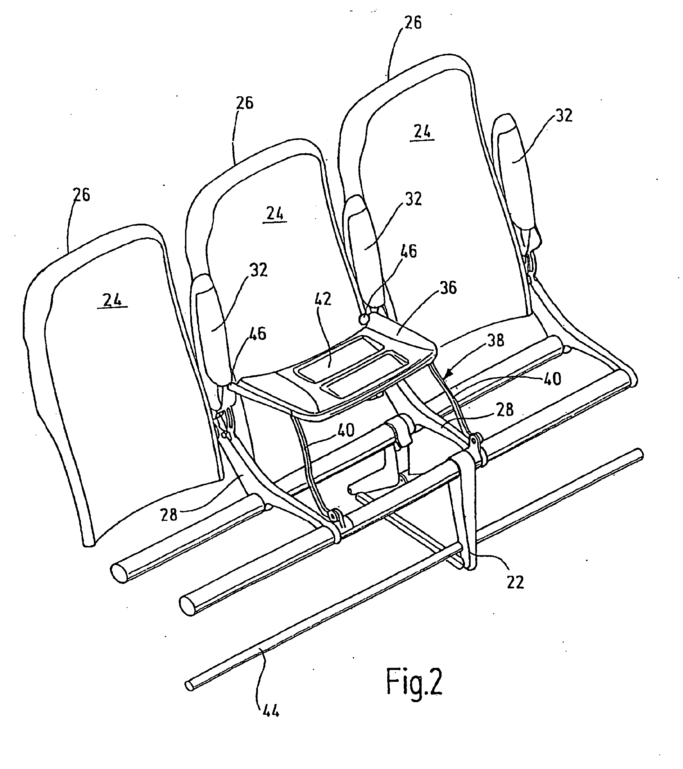

Die erste Ausführungsform einer erfindungsgemäßen Fluggastsitzreihe nach den Fig.1 und 2 weist mindestens drei Sitze 10,12,14 auf mit einem allen Sitzen gemeinsamen Sitzgestell 16, das einen vorderen Querholm 18 und einen zu diesem parallelen hinteren Querholm 20 aufweist. Die beiden Querholme 18,20 sind aus Leichtmetall oder Aluminium, insbesondere in der Art von Hohlrohren ausgebildet. Ferner sind diese relativ zueinander unbeweglich mittels Sitzfüßen 22 fest verbunden, wobei der einfacheren Darstellung wegen in der Fig.2 nur ein Sitzfuß 22 eingezeichnet ist. Ferner weist die Fluggastsitzreihe Sitzteilpolster 24 tragende Polsterträger 26 auf, wobei der verbesserten Darstellung wegen wiederum in den Fig.1 und 2 die Sitzteilpolster des eigentlichen Sitzteils nicht dargestellt sind. Des weiteren sind zwischen den jeweiligen Sitzen und von den beiden Querholmen 18,20 getragen sowie endseitig an den Sitzen angeordnet Sitzteiler 28 vorhanden. Der einfacheren Darstellung wegen wurde in Blickrichtung auf die Fig.1 und 2 gesehen der vorderste Sitzteiler 28 weggelassen. Der jeweilige Sitz 10,12,14 ist mit einer Rückenlehne 30 versehen, die in üblicher und daher nicht mehr näher beschriebener Art und Weise in ihrer Neigung einstellbar sind. Gemäß der Darstellung nach den Fig.1 und 2 ist die jeweilige Rückenlehne 30 in ihrer aufrechten Stellung gezeigt, die beispielsweise der Start- und Landeposition der Fluggastsitzreihe entspricht. Des weiteren sind Armlehnen 32 vorhanden, die in den Darstellungen nach den Fig.1 und 2 in ihrer hochgeklappten Stellung wiedergegeben sind. Sofern die gezeigte Fluggastsitzreihe in Blickrichtung auf die Fig.1 und 2 gesehen beispielsweise linksseitig an eine Kabinenwand anstoßen sollte, kann auch für den äußerst linken Sitz nach außen hin die Armlehne entfallen. Vorzugsweise erfolgt die Schwenkmöglichkeit für die einzelnen Armlehnen 32 entlang einer von den Sitzteilern 28 getragenen Führungsstange, wobei die Führungsstange in Führungsstege 34 unterteilt ist, so dass jeder Armlehne 32 ein eigenständiges Schwenksegment zugeordnet ist.

Gemäß den Darstellungen nach den Fig.1 und 2 weist der mittlere Sitz 12 einer Sitzreihe zwischen zwei benachbarten Sitzen 10,14 ein Trennteil 36 auf, das in einer Nichtgebrauchsstellung (vgl. Fig.1) zumindest teilweise im Bereich der zuordenbaren Sitzfüße 22 für diesen mittleren Sitz 12 und in einer Gebrauchsstellung (vgl. Fig.2) zumindest teilweise oberhalb der Sitzteiler 28 angeordnet ist. Ferner ist das Trennteil 36 mittels einer als Ganzes mit 38 bezeichneten Schwenkeinrichtung zwischen den genannten Stellungen hin- und herschwenkbar. Das Trennteil 36 ist in den vorliegenden Ausführungsbeispielen als Tischelement ausgebildet, das in der Nichtgebrauchsstellung eine im wesentlichen vertikale (Fig.1) und in der Gebrauchsstellung (Fig.2) eine im wesentlichen horizontale Lage gegenüber dem jeweiligen Sitz 12 einnimmt. Die Schwenkeinrichtung 38 weist zwei winklig ausgebildete Schwenkhebel 40 auf, die mit ihrem einen Ende schwenkbar an der Oberseite des vorderen Querholmes 18 angelenkt sind und mit ihrem anderen Ende schwenkbar an einer Längsseite des Trennteils 36. Ist das Trennteil 36 gemäß der Darstellung nach der Fig.1 in seiner Nichtgebrauchsstellung, verlaufen die beiden Schwenkhebel 40 im wesentlichen entlang der Längsseite des Trennteils 36 und sind an ihrem oberen Ende winklig derart umgebogen, dass vorzugsweise unter Anlage der Querholm 18 für den mittleren Sitz 12 überfaßt ist. Des weiteren ergibt sich aus den Darstellungen nach den Fig.1 und 2, dass in der Nichtgebrauchsstellung die nutzbare Tischfläche 42 des Tischelementes vom Sitzgestell 16 weg in Richtung Umgebung weist. Insoweit kann vorgesehen sein, die in die Umgebung weisende Tischfläche 42 in ihrer Nichtgebrauchsstellung von einer schalenartigen Abdeckung (nicht dargestellt) abzudecken, um dergestalt Beschädigungen oder Verschmutzungen der Tischfläche 42 zu vermeiden. Vorzugsweise ist dabei die nicht näher dargestellte schalenartige Abdeckung schwenkbar an mindestens einem Sitzfuß 22 über die untere Querstange 44 angelenkt. Ist das Trennelement 36 in seiner Gebrauchsstellung, kann dann die schalenartige Abdeckung wieder in ihre abdeckende Stellung hochgeklappt werden, um dergestalt den Beinraum im Bodenbereich der Fluggastsitzreihe nicht zu beeinträchtigen.

Das Trennteil 36 weist beidseitig nach oben oder hinten vorstehende Rast- oder Einklinkeinrichtungen 46 auf, die maulartig zapfenartige Auflageteile als Bestandteil der Führungsstege 34 übergreifen, sobald das Trennteil 36 in seiner in der Fig.2 dargestellten Gebrauchsstellung ist. Die dahingehenden Auflageteile können auch durch eine Führungsstange oder Segmente derselben gebildet sein oder als eigenständige Bauteile 34 parallel oder koaxial zu dieser Stange oder deren Segmente verlaufen. Sofern zumindest die mittleren schwenkbaren Armlehnen 32 in ihrer hochgeklappten Stellung integraler Bestandteil der Rückenlehnen 30 sind, entsteht dergestalt zumindest in der hochgestellten Stellung derselben eine Art Couch aus mindestens drei in Reihe nebeneinander angeordneten Sitzen 10,12,14.

Die Nichtgebrauchsstellung nach der Fig.1 zeigt die Anordnung der Fluggastsitzreihe in Economy - Konfiguration, bei der alle drei Sitze für Sitzbenutzer nutzbar sind. Befindet sich das Trennelement 36 gemäß der Darstellung nach der Fig.2 in seiner Gebrauchsstellung, entfällt der mittlere Sitz 12 für eine Sitzbenutzung und durch die hochgeklappten, mittleren Armlehnen 32 ist die Sitzbreite für den inneren und äußeren Sitz 10 bzw. 14 entsprechend erhöht. Des weiteren kann das Trennteil 36 an seinen gegenüberliegenden Enden auch Stützelemente 48 aufweisen, die die Funktion der sonst üblichen heruntergeklappten Armlehnen 32 wahrnehmen.

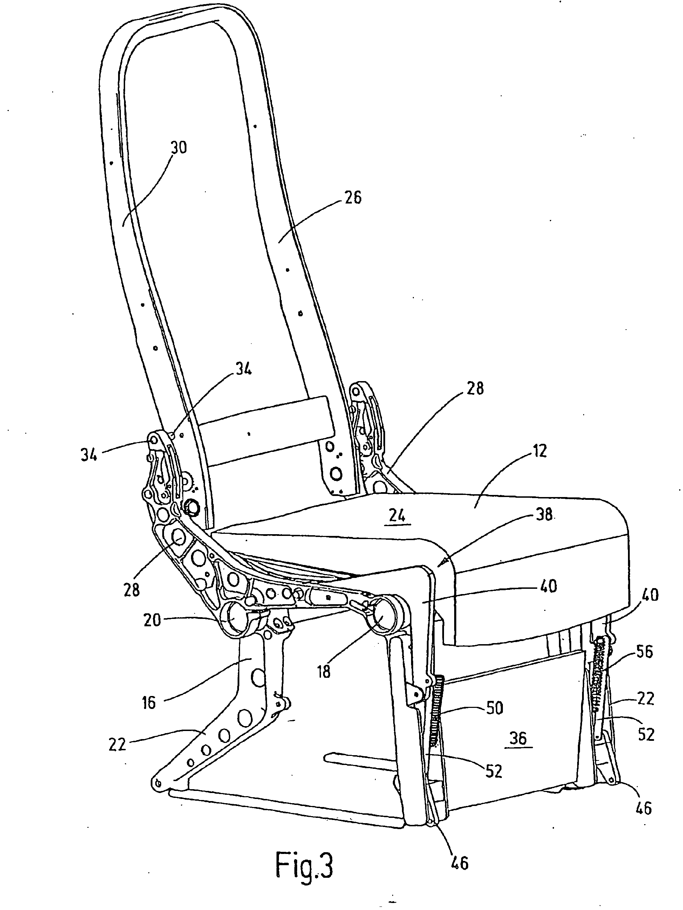

Sofern die weitere Ausführungsform nach den Fig.3ff dem Ausführungsbeispiel nach den Fig.1 und 2 entspricht, werden insoweit für die zweite Ausführungsform für dieselben Bauelemente und Baugruppen dieselben Bezugszeichen verwendet wie für das erste Ausführungsbeispiel. Insoweit gelten dann die bisher getroffenen Ausführungen auch für die weitere Ausführungsform nach den Fig. 3 bis 5.

Der besseren Darstellung wegen wurde für die Fluggastsitzreihe nach der zweiten Ausführungsform nur noch der mittlere Sitz 12 dargestellt und im übrigen das Sitzteilpolster 24 für die Rückenlehne 30 weggelassen. Ferner sind die Armlehnen 32 in der Darstellung nicht gezeigt. Die Schwenkhebel 40 der Schwenkeinrichtung 38 sind im wesentlichen gleichschenklig ausgebildet und übergreifen in der Nichtgebrauchsstellung nach der Fig.3 den oberen Bereich des Querholmes 18. Die dahingehende Lösung kommt ohne Abdeckung aus, da die nutzbare Tischfläche 42 in der Nichtgebrauchsstellung nicht der Umgebung zugewandt ist, sondern dem Sitzgestell 16 mit seinen Sitzfüßen 22. Ein weiterer Unterschied besteht darin, dass die Rast- und Einklinkeinrichtung 46 in der Nichtgebrauchsstellung dem Boden zugewandt ist, auf dem über das Sitzgestell 16 der jeweilige Sitz aufständerbar ist.

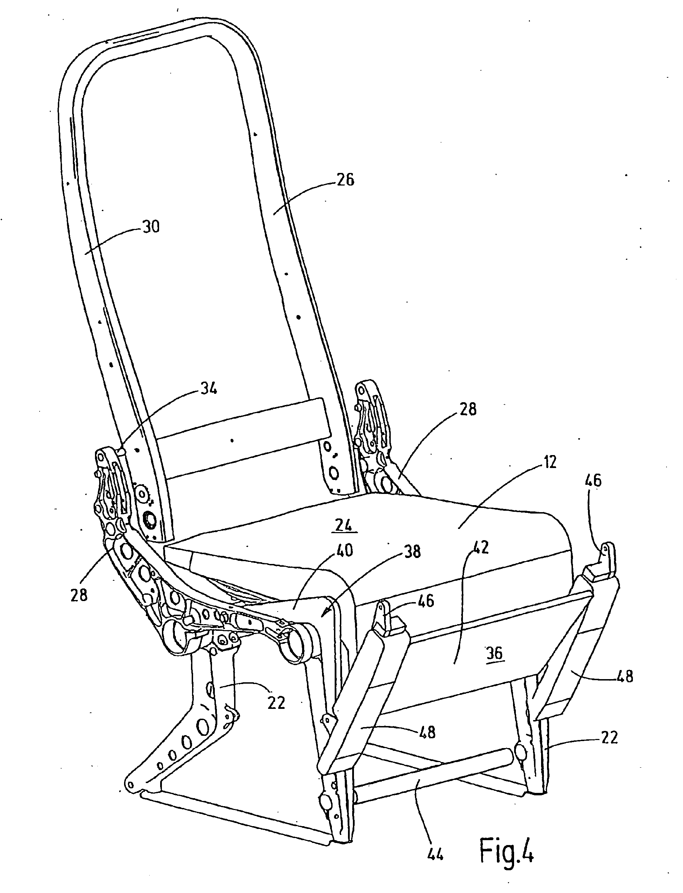

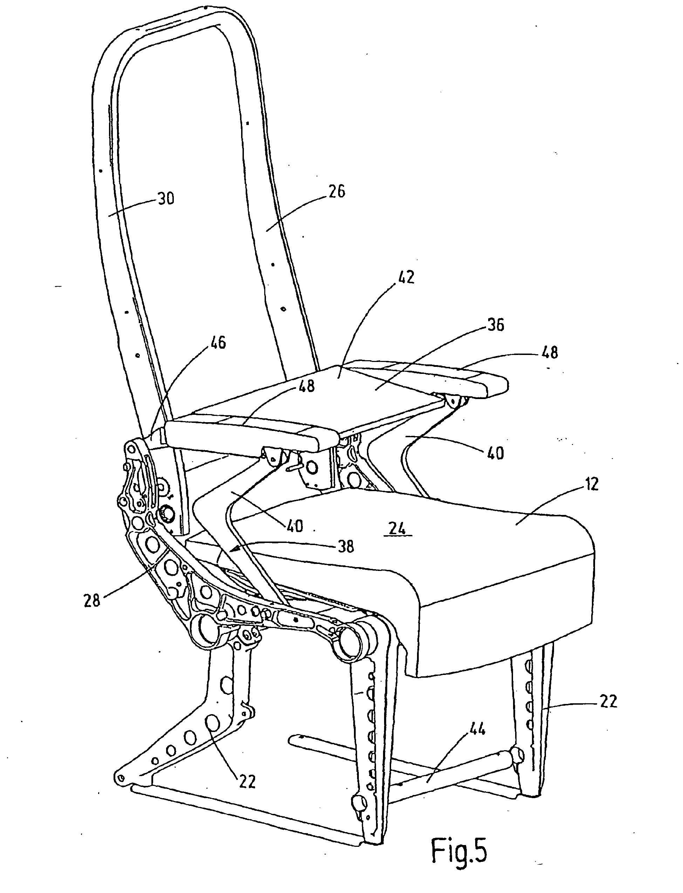

Mittels eines Kraftspeichers in Form zweier Zugfedern 50 wird bei Auslösung das Trennelement 36 aus seiner Nichtgebrauchsstellung nach der Fig.3 entgegen dem Uhrzeigersinn derart in eine Teilstellung nach der Fig. 4 geschwenkt, dass die bisher innen liegende nutzbare Tischfläche 42 dem Betrachter nach der Fig.4 zugewandt erscheint. Ferner ist die Rast- und Einklinkeinrichtung 46 gleichfalls nach oben verschwenkt, was durch Lenkhebel 52 unterstützt ist. Insoweit entspannen sich die vorgespannten Zugfedern 50 bei der dahingehenden Dreh- oder Schwenkbewegung für das Trennteil 36. In einer weiteren Schwenkbewegung läßt sich dann nunmehr über die Schwenkhebel 40 das Trennteil 36 in seine Gebrauchsstellung gemäß der Darstellung nach der Fig.5 verschwenken und die Rast- und Einklinkeinrichtung 46 greift dann wiederum in die zuordenbaren Führungsstege 34 zwischen den Sitzteilern 28 des Sitzes 12 ein. Der Auslösevorgang für die Teilschwenkbewegung von Position nach der Fig.3 in die Position nach der Fig.4 kann von einer Bedienperson einer Service - Mannschaft zentral ausgelöst werden, beispielsweise über einen federbelasteten Zugknopf (nicht dargestellt) auf der der Gangseite der jeweiligen Fluggastsitzreihe zugewandten Seite. Die letzte Schwenkbewegung von der Teilstellung nach der Fig.4 in die Gebrauchsstellung nach der Fig.5 läßt sich in einfacher Weise von Hand bewerkstelligen. Auch bei dieser Lösung können seitliche Aufstützelemente 48 am Trennelement 36 als Armlehnen dienen. Das Zurückschwenken von der Gebrauchsstellung nach der Fig.5 in die Nichtgebrauchsstellung nach der Fig.3 erfolgt wiederum in umgekehrter Weise, wobei mit Erreichen der Nichtgebrauchsstellung die Zugfedern 50 für einen erneuten automatischen Auslösevorgang gespannt werden.

Mit der erfindungsgemäßen Fluggastsitzreihe ist es möglich, eine Economy-Fluggastsitzreihe mit drei Sitzen in eine Business - Fluggastsitzreihe mit zwei Sitzen und entsprechender Sitzverbreiterung reversibel umzubauen, wobei mit der Umwandlung eine zusätzliche Tischfläche zwischen den beiden Business - Sitzen zur Verfügung steht. Anstelle der Ausbildung des Trennteils 36 in Form eines Tischelementes bestehen hier gegebenenfalls auch noch andere Möglichkeiten, das Trennteil 36 anders auszugestalten, beispielsweise als plattenförmiges Trennelement, um dergestalt eine Separierung zwischen den Business - Sitzen einer Fluggastsitzreihe zu gewährleisten, was zur Erhöhung der Privatsphäre des Sitzbenutzers mit beitragen kann.

## Patentansprüche

1. Fluggastsitzreihe mit
a) mindestens drei Sitzen (10,12,14),
b) einem allen Sitzen gemeinsamen Sitzgestell (16), das einen vorderen Querholm (18) und einen zu diesem parallelen hinteren Querholm (20) aufweist, die relativ zueinander unbeweglich mittels Sitzfüßen (22) fest verbunden sind,
c) Sitzteilpolster (24) tragenden Polsterträgern (26),
d) von den beiden Querholmen (18,20) getragenen, an den Enden der Sitzreihe und zwischen den Sitzen angeordneten Sitzteilern (28),
e) in ihrer Neigungslage einstellbaren Rückenlehnen (30), die schwenkbar mit den Sitzteilern (28) verbunden sind, und
f) Armlehnen (32), vorzugsweise an beiden Enden der Sitzreihe und zwischen den Sitzen (10,12,14), wobei die letztgenannten Armlehnen (32) auf mindestens einer parallel zu den Querholmen (18,20) verlaufenden und von den zwischen den Sitzen (10,12,14) angeordneten Sitzteilern (28) getragenen Führungsstegen (34) schwenkbar angeordnet sind,
wobei ein mittlerer Sitz (12) einer Sitzreihe zwischen benachbarten Sitzen (10,14) ein Trennteil (36) aufweist, das in einer Nichtgebrauchsstellung anordenbar ist und in einer Gebrauchsstellung oberhalb der Sitzteiler (28) mit einer im wesentlichen horizontalen Lage gegenüber dem jeweiligen Sitz angeordnet ist und wobei mittels einer Schwenkeinrichtung (38) das Trennteil (36) zwischen den genannten Stellungen bewegbar ist, **dadurch gekennzeichnet, dass** das Trennteil (36) in der Gebrauchsstellung die nutzbare Sitzfläche des mittleren Sitzes (12) überdeckt und in die Nichtgebrauchsstellung in den Bereich der zuordenbaren Sitzfüße (22) für diesen mittleren Sitz (12) schwenkbar ist und in dieser Stellung eine im wesentlichen vertikale Lage gegenüber dem jeweiligen Sitz (12) einnimmt.

2. Fluggastsitzreihe nach Anspruch 1, **dadurch gekennzeichnet, dass** das Trennteil (36) ein Tischelement ist.

3. Fluggastsitzreihe nach Anspruch 1 oder 2, **dadurch gekennzeichnet, dass** die Schwenkeinrichtung (38) mindestens einen schwenkbar angeordneten, winklig ausgebildeten Schwenkhebel (40) aufweist, der jeweils mit einem Ende schwenkbar am Sitzgestell oder Teilen (18) desselben angelenkt ist und mit seinem anderen Ende schwenkbar an Teilen des Trennteils (36).

4. Fluggastsitzreihe nach Anspruch 1 oder 2, **dadurch gekennzeichnet, dass** die Schwenkeinrichtung (38) ein Parallelogrammgestänge aufweist, dessen Lenker mit ihrem oberen Ende in der Nichtgebrauchsstellung nach vorne und in der Gebrauchsstellung nach hinten weisen.

5. Fluggastsitzreihe nach einem der Ansprüche 2 bis 4, **dadurch gekennzeichnet, dass** in der Nichtgebrauchsstellung die nutzbare Tischfläche (42) des Tischelementes vom Sitzgestell (16) weg in Richtung Umgebung oder in Richtung Sitzgestell (16) weist.

6. Fluggastsitzreihe nach Anspruch 5, **dadurch gekennzeichnet, dass** bei der in die Umgebung weisenden Tischfläche (42) diese in der Nichtgebrauchsstellung von einer schalenartigen Abdeckung abgedeckt ist, die schwenkbar an mindestens einem Sitzfuß (22) angelenkt ist.

7. Fluggastsitzreihe nach einem der Ansprüche 1 bis 6, **dadurch gekennzeichnet, dass** das Trennteil (36) in der Gebrauchsstellung mit einer Rast- oder Einklinkeinrichtung (46) mit feststehenden Teilen des zuordenbaren Sitzes, insbesondere des jeweiligen Führungssteges (34), verrast- bzw. einklinkbar ist, an dem jeweils die zuordenbare Armlehne (32) schwenkbar angeordnet ist, oder an Auflageteilen des Sitzes, die parallel oder koaxial zum jeweiligen Führungssteg (34) verlaufen.

8. Fluggastsitzreihe nach einem der Ansprüche 1 bis 7, **dadurch gekennzeichnet, dass** zumindest die mittleren schwenkbaren Armlehnen (32) in ihrer hochgeklappten Stellung integraler Bestandteil einer dann couchartigen Rückenlehne (30) sind, gebildet aus mindestens drei in Reihe nebeneinander angeordneten Sitzen (10,12,14), zumindest sofern die einzelnen Rückenlehnen (30) in ihrer aufrechten Neigungseinstellage sind.

9. Fluggastsitzreihe nach einem der Ansprüche 1 bis 8, **dadurch gekennzeichnet, dass** mittels mindestens eines Kraftspeichers (50) das Trennteil (36) automatisch von seiner Nichtgebrauchsstellung nach Auslösen oder Betätigen zumindest teilweise in Richtung seiner Gebrauchsstellung gebracht ist.

10. Fluggastsitzreihe nach einem der Ansprüche 1 bis 9, **dadurch gekennzeichnet, dass** das Trennteil (36) an seinen gegenüberliegenden Enden, den benachbarten Sitzen (10,14) eines mittleren Sitzes (12) zugewandt, in der Art von Armlehnen Aufstützelemente (48) aufweist.

## Claims

1. Airplane passenger seat row with
a) at least three seats (10, 12, 14),
b) a seat frame (16) common to all three seats, comprising a front transverse beam (18) and a rear transverse beam (20) extending parallel to the same, the same being firmly connected in relation to each other via non-moveable seat legs (22),
c) upholstery supports (26) supporting upholstered seat parts (24),
d) seat parts (28) located at the ends of the seat row and between the seats by both transverse beams (18, 20),
e) back rests (30), the position of which is reclinable, tiltably connected with the seat parts (28); and
f) arm rests (32), preferably at both ends of the seat row and between the seats (10, 12, 14), whereby the latter arm rests (32) are tiltably located on at least one guide rail (34) extending parallel to the transverse beams (18, 20) and supported by the seat parts (10, 12, 14) located between the seat dividers (28),
whereby a middle seat (12) of a seat row comprises a separating part (36) between adjacent seats (10, 14), which can be positioned in a non-usage position and in a usage position above the seat parts (28) in a substantially horizontal position in relation to the relevant seat, and whereby the separating part (36) can be moved between the said positions by means of a tiling means (38), **characterised in that** the separating part (36) covers the usable seat surface of the middle seat (12) in the usage position, and can be tilted into the area of the associated seat legs (22) of the middle seat (12) in the non-usage position, and takes up a substantially vertical position in relation to the relevant seat (12) in this position.

2. Airplane passenger seat row according to Claim 1, **characterised in that** the separating part (36) consists of a table element.

3. Airplane passenger seat row according to Claim 1 or 2, **characterised in that** the tilting means (38) comprises at least one tiltably arranged angled tilt lever (40), the same being tiltably affixed to the seat frame or parts (18) of the same with its one end, and tiltably affixed to parts of the separating part (36) with its other end.

4. Airplane passenger seat row according to Claim 1 or 2, **characterised in that** the tilting means (38) comprises a parallelogram frame, the steering of which faces towards the front with its upper end in the non-usage position, and towards the rear in the usage position.

5. Airplane passenger seat row according to one of the Claims 2 to 4, **characterised in that** the usable table surface (42) of the table element faces away from the seat frame (16) in the direction of its surroundings of in the direction of the seat frame (16) in the non-usage position.

6. Airplane passenger seat row according to Claim 5, **characterised in that** the table surface (42) facing towards its surroundings is covered by means of a bowl-shaped cover in its non-usage position, the same being tiltably affixed to at least one seat leg (22).

7. Airplane passenger seat row according to one of the Claims 1 to 6, **characterised in that** the separating part (36) can be arrested, i.e. snapped into stationary parts of the associated seat in the usage position by means of an arresting or snap-in means (46), in particular of the relevant guide rod (34), on which the associated arm rest (32) is tiltably affixed, or on upholstery parts of the seat extending parallel or coaxially in relation to the relevant guide rod (34).

8. Airplane passenger seat row according to one of the Claims 1 to 7, **characterised in that** at least the middle tiltable arm rests (32) form an integral part of a then couch-like back rest (30) in their folded position, consisting of at least three adjacent seats (10, 12, 14) arranged in a row, at least as long as the individual back rests (30) are in their upright incline position.

9. Airplane passenger seat row according to one of the Claims 1 to 8, **characterised in that** the separating part (36) is automatically brought from its non-usage position following activation or initiation at least in part in the direction of its usage position by means of at least one power store (50).

10. Airplane passenger seat row according to one of the Claims 1 to 9, **characterised in that** the separating part (36) comprises support elements (48) in the form of arm rests at its opposite ends that face the adjacent seats (10, 14) of a middle seat (12).

## Revendications

1. Rangée de sièges de passagers d'avion comprenant
a) au moins trois sièges (10, 12, 14),
b) un bâti (16) de siège, qui est commun à tous les sièges et qui a une traverse (18) avant et une traverse (20) arrière parallèle à celle-ci, qui sont reliées solidement sans possibilité de mouvement l'une par rapport à l'autre au moyen de pieds (22) de siège,
c) des porte-coussins (26) portant des coussins (24) partiels de siège,
d) des diviseurs (28) de sièges, qui sont portés par les deux traverses (18, 20) et qui sont disposés aux extrémités de la rangée de sièges et entre les sièges,
e) des dossiers (30) réglables en inclinaison, qui sont assemblés de manière à pouvoir basculer avec les diviseurs (28) de sièges, et
f) des accotoirs (32), de préférence aux deux extrémités de la rangée de sièges et entre les sièges (10, 12, 14), les accotoirs (32) mentionnés en dernier étant montés de manière à pouvoir basculer sur au moins une barrette (34) de guidage parallèle aux traverses (18, 20) et portée par les diviseurs (28) de sièges disposés entre les sièges (10, 12, 14),
dans laquelle un siège (12) médian d'une rangée de sièges entre deux sièges (10, 14) voisins a une pièce (36) de séparation qui peut être mise en une position de non-utilisation et qui est disposée en une position d'utilisation au-dessus du diviseur (28) de sièges, en ayant une position sensiblement horizontale par rapport aux sièges respectifs et dans laquelle la pièce (36) de séparation peut être déplacée entre lesdites positions au moyen d'un dispositif (38) de basculement, **caractérisée en ce que** la pièce (36) de séparation recouvre, en la position d'utilisation, la surface de siège utile du siège (12) médian et, en la position de non-utilisation, peut être basculée dans la partie des pieds (22) de siège pouvant être associée à ce siège (12) médian, et en cette position prend sensiblement une position verticale par rapport au siège (12) respectif.

2. Rangée de sièges de passagers d'avion suivant la revendication 1, **caractérisée en ce que** la pièce (36) de séparation est un élément de tablette.

3. Rangée de sièges de passagers d'avion suivant la revendication 1 ou 2, **caractérisée en ce que** le dispositif (38) de basculement a au moins un levier (40) qui est monté basculant, qui est constitué en équerre, qui est articulé respectivement par une extrémité au bâti de siège ou à des parties (18) de celui-ci et qui, par son autre extrémité, peut basculer sur des parties de la pièce (36) de séparation.

4. Rangée de sièges de passagers d'avion suivant la revendication 1 ou 2, **caractérisée en ce que** le dispositif (38) de basculement comporte un parallélogramme articulé dont les éléments sont dirigés par leur extrémité supérieure en la position de non-utilisation vers l'avant et en la position d'utilisation vers l'arrière.

5. Rangée de sièges de passagers d'avion suivant l'une des revendications 2 à 4, **caractérisée en ce qu'**en position de non-utilisation, la surface (42) utile de l'élément de tablette est tournée en s'éloignant du bâti (16) de siège dans la direction ambiante ou dans la direction du bâti (16) de siège.

6. Rangée de sièges de passagers d'avion suivant la revendication 5, **caractérisée en ce que**, pour la surface (42) de tablette tournée vers l'atmosphère ambiante, cette surface est recouverte, dans la position de non-utilisation, d'une coquille de recouvrement qui est articulée sur au moins un pied (22) de siège.

7. Rangée de sièges de passagers d'avion suivant l'une des revendications 1 à 6, **caractérisée en ce que** la pièce (36) de séparation peut être verrouillée ou encliquetée dans la position d'utilisation par un dispositif (46) de verrouillage ou d'encliquetage avec des parties fixes du siège pouvant lui être associées, notamment de la barrette (34) de guidage respective sur laquelle est monté basculant le dossier (32) pouvant être associé ou sur des parties d'assise du siège qui s'étendent parallèlement ou coaxialement à la barrette (34) de guidage.

8. Rangée de sièges de passagers d'avion suivant l'une des revendications 1 à 7, **caractérisée en ce qu'**au moins les dossiers (32) médians basculants font, dans leur position relevée vers le haut, partie intégrante d'un dossier (30) du type couchette formé d'au moins trois sièges (10, 12, 14) disposés en rangée côte à côte, au moins dans la mesure où les divers dossiers (30) sont dans leur position d'inclinaison relevée.

9. Rangée de sièges de passagers d'avion suivant l'une des revendications 1 à 8, **caractérisée en ce que** la pièce (36) de séparation peut être mise, au moins au moyen d'un accumulateur (50) de force, automatiquement de sa position de non-utilisation après déclenchement ou actionnement au moins en partie dans la direction de sa position d'utilisation.

10. Rangée de sièges de passagers d'avion suivant l'une des revendications 1 à 9, **caractérisée en ce que** la pièce (36) de séparation a, à ses extrémités opposées qui sont tournées vers les sièges (10, 14) voisins d'un siège (12) médian, des éléments (48) d'appui à la façon d'accotoirs.
